# EUROPÄISCHE PATENTSCHRIFT

(11) **EP 2 149 194 B1**
(45) Veröffentlichungstag und Bekanntmachung des Hinweises auf die Patenterteilung: **29.04.2020**
(21) Anmeldenummer: 08758613.7
(22) Anmeldetag: 19.05.2008
(51) Int. Cl.: H02K 33/02, H02P 13/10, B65G 27/32

(54) **SCHWINGANTRIEB**
OSCILLATING DRIVE
COMMANDE OSCILLANTE

(30) Priorität: 21.05.2007 DE 102007023790; 11.08.2007 DE 102007037956
(43) Veröffentlichungstag der Anmeldung: 03.02.2010
(73) Patentinhaber: Jöst GmbH + Co. KG, 48249 Dülmen (DE)
(72) Erfinder: KREFT, Manfred, 48301 Nottuln (DE)
(74) Vertreter: Von Rohr Patentanwälte Partnerschaft mbB
(86) Internationale Anmeldenummer: PCT/EP2008/003996
(87) Internationale Veröffentlichungsnummer: WO 2008/141789

(56) Entgegenhaltungen:
- WO-A-2004/046550
- WO-A1-2004/046550
- DE-A1- 4 227 847
- DE-A1- 4 227 847
- US-A1- 2004 169 480
- US-A1- 2004 169 480
- US-A1- 2005 111 987
- US-A1- 2005 111 987

## Beschreibung

Die vorliegende Erfindung betrifft ein Verfahren zum Betreiben eines Schwingantriebs gemäß dem Oberbegriff des Anspruchs 1, einen Schwingantrieb, der zum Betrieb mit einem solchen Verfahren ausgebildet ist, sowie eine Schwingfördereinrichtung mit einem derartigen Schwingantrieb.

Die vorliegende Erfindung betrifft einen Schwingantrieb für eine Schwingfördereinrichtung. Unter dem Begriff "Schwingfördereinrichtung" ist insbesondere eine Förderrinne, ein Sieb, ein Separator oder eine sonstige in Schwingung versetzbare Manipulations- oder Handhabungseinrichtung für Werkstücke, Abfall, Schüttgut o. dgl. zu verstehen.

Die DE 42 27 847 A1 offenbart einen Schwingantrieb für eine Schwingfördereinrichtung mit einem Elektromagneten und einem Anker, die über eine Feder miteinander gekoppelt und relativ zueinander in Schwingung versetzbar sind.

Der Schwingantrieb wird mit der anzutreibenden Schwingfördereinrichtung, wie einer Förderrinne, gekoppelt. So ergibt sich ein 2-Massen-Resonanz-System, welches in Resonanznähe betrieben werden soll. Bei den hier in Rede stehenden Schwingantrieben verhältnismäßig hoher Leistung ist die Schwingfrequenz bisher von der Netzfrequenz der Stromversorgung abhängig bzw. wird durch diese festgelegt. Die Eigenfrequenz (Resonanzfrequenz) des Schwingsystems bestehend aus Schwingantrieb und Schwingfördereinrichtung muss so eingestellt werden, dass die Eigenfrequenz in der Nähe der Resonanzfrequenz des Schwingsystems liegt, jedoch von dieser verschieden ist. Da die Schwingfördereinrichtungen, insbesondere Förderrinnen, unterschiedliche Massen (Nutzgewichte des Schwingantriebs) haben, wird üblicherweise der Schwingantrieb durch Hinzufügen oder Entfernen von Gewichten an der Gegenschwingmasse so verändert, bis die Eigenfrequenz des Schwingsystems in gewünschter Weise eingestellt wird. Diese Anpassung ist nur in relativ engen Grenzen möglich und erfordert Zeit und Fachkenntnisse.

Üblicherweise erfolgt eine Auslegung des Schwingantriebs für einen engen Nutzgewichtsbereich und eine zusätzliche Kalibrierung für das tatsächliche Nutzgewicht vor Ort nach der Montage. Dies gestattet jedoch keinen optimalen Betrieb, und die Kalibrierungen sind aufwendig.

Die US 2004/0169480 A1 offenbart ein Kontrollsystem für einen linearen Vibrationsmotor, der zum Beispiel mit einem Elektromagneten und einem Anker, die über eine Feder miteinander gekoppelt und relativ zueinander in Schwingung versetzbar sind, ausgebildet sein kann. Die Antriebsfrequenz und/oder die Amplitude bzw. der Effektivwert der Antriebsspannung werden vom Kontrollsystem erfasst und geregelt. Besonders bevorzugt wird dabei die Schwingweite des linearen Vibrationsmotors über Variation der Antriebsfrequenz angepasst.

Die WO 2004/046550 A1 offenbart ein Kontrollsystem für die Bewegung eines Kolbens in einer Fluidpumpvorrichtung. Der Kolben wird von einem spannungsbetriebenen Linearmotor in Bewegung versetzt. Die Antriebsspannung wird durch einen Halbleiterschaltkreis in Verbindung mit einem Positionssensor, der die Position des Kolbens registriert, von selbst zyklisch variiert.

Die US 2005/0111987 A1 offenbart eine Vorrichtung und ein Verfahren zum Steuern des Betriebs eines Kolbenverdichters. Die Schwingweite des Kolbenverdichters sowie der für seinen Betrieb aufgebrachte elektrische Strom werden registriert und auf dieser Basis eine Resonanzfrequenz des Systems berechnet. Anschließend wird die Antriebsspannung derart verändert, dass die Frequenz des Kolbenverdichters der zuvor berechneten Resonanzfrequenz entspricht, und dass die Schwingweite der bevorzugten Schwingweite entspricht.

Der vorliegenden Erfindung liegt die Aufgabe zugrunde, einen Schwingantrieb, eine Schwingfördereinrichtung mit einem derartigen Schwingantrieb und ein Verfahren zum Betreiben eines Schwingantriebs anzugeben, wobei ein einfacher, robuster und/oder kostengünstiger Aufbau, eine universelle Einsetzbarkeit, insbesondere auch für sehr unterschiedliche Nutzgewichte, eine hohe Effizienz und/oder eine einfache Steuerung oder Regelung ermöglicht wird bzw. werden.

Die obige Aufgabe wird durch ein Verfahren gemäß Anspruch 1, einen Schwingantrieb gemäß Anspruch 7 oder eine Schwingfördereinrichtung gemäß Anspruch 15 gelöst. Vorteilhafte Weiterbildungen sind Gegenstand der Unteransprüche.

Ein Aspekt der vorliegenden Erfindung, der einen besonders effektiven Betrieb ermöglicht, sieht vor, dass die Antriebsspannung zumindest im Wesentlichen symmetrisch bezüglich der Nulllinie verläuft. So können unerwünschte Gleichstromanteile vermieden werden, da diese zu unerwünschten Remanenzeffekten führen können.

Vorschlagsgemäß ist die Ableitung der Antriebsspannung bei Durchgang durch oder Annäherung an die Nulllinie zumindest im Wesentlichen null. So können unerwünschte Oberwellen vermieden werden.

Vorzugsweise wird die Schwingweite der Relativbewegung des Elektromagneten zum Anker erfasst. Dies erfolgt vorzugsweise mit einem Sensor, insbesondere mit einem induktiven Wegaufnehmer. Dies ermöglicht es, den Schwingantrieb in einem optimalen Bereich - insbesondere mit einer optimalen Schwingweite - arbeiten zu lassen. Beim Stand der Technik wird nämlich nicht die Schwingweite des Schwingantriebs, sondern üblicherweise die Auslenkung oder Schwingung der Schwingfördereinrichtung erfasst. Aufgrund unterschiedlicher Massenverteilungen und in Abhängigkeit von der Federhärte oder sonstiger Parameter hängt die Schwingweite (hiermit ist bei der vorliegenden Erfindung immer die Relativbewegung des Elektromagneten zum Anker gemeint) von der Schwingung der Schwingfördereinrichtung in unterschiedlich starkem Maß ab und variiert mit der Beladung und kann dementsprechend aus diesen Betriebsparametern üblicherweise nicht oder nur mit relativ großem Aufwand bzw. mit relativ großer Unsicherheit abgeleitet werden.

Ein weiterer Aspekt der vorliegenden Erfindung liegt darin, dass die Schwingweite des Schwingantriebs geregelt, insbesondere konstant gehalten wird. So ist es möglich, den Schwingantrieb in einem optimalen Arbeitsbereich zu betreiben. Dementsprechend kann eine hohe, insbesondere um bis zu etwa 40 % höhere Effizienz erreicht werden.

Ein weiterer Aspekt der vorliegenden Erfindung liegt darin, die Federstärke der Feder zur Anpassung der Leistung des Schwingantriebs zu variieren. Vorzugsweise ist die Feder aus mehreren, insbesondere blattförmigen Federelementen aufgebaut, deren Anzahl zur Variation der Federstärke veränderbar ist und/oder die gegen andere Federelemente mit anderen Federstärken austauschbar sind. So kann auf sehr einfache Weise eine Anpassung des Schwingantriebs an die jeweils gewünschte bzw. erforderliche Leistung erfolgen. Insbesondere ist der Schwingantrieb dann für einen besonders breiten Nutzgewichtbereich einsetzbar.

Ein weiterer Aspekt der vorliegenden Erfindung liegt darin, die Antriebsfrequenz der Antriebs- bzw. Wechselspannung, mit der der Elektromagnet betrieben wird, in einem Kalibrierschritt bei jedem Einschalten des Schwingantriebs und/oder periodisch und/oder bei Erreichen oder Unterschreiten eines Mindestwerts durch die Schwingungsweite und/oder bei Erreichen oder Überschreiten eines oberen Grenzwerts des Effektivwerts oder Spitzenwert der Antriebsspannung festzulegen. So werden auf sehr einfache und insbesondere automatische Weise eine Anpassung der Schwingfrequenz an die jeweiligen Gegebenheiten, insbesondere die aktuelle Beladung bzw. des aktuellen Nutzgewichts o. dgl., und damit ein effizienterer Betrieb ermöglicht.

Besonders bevorzugt ist die Antriebs- bzw. Schwingfrequenz variabel, insbesondere in einem Kalibrierschritt festlegbar. Insbesondere richtet sich diese Frequenz nach der Eigenfrequenz des Schwingsystems bestehend aus Schwingantrieb und Schwingfördereinrichtung. Besonders bevorzugt ist die Antriebs- bzw. Schwingfrequenz um im Wesentlichen 3 bis 5 % höher als die Eigenfrequenz.

Weitere Aspekte der vorliegenden Erfindung, die einen besonders effektiven Betrieb ermöglichen, sehen vor, dass die Antriebsfrequenz halb so groß wie die Schwingfrequenz ist, und/oder dass die Antriebsspannung zumindest im Wesentlichen aus vollen Sinusperioden mit abwechselnden Vorzeichen aufgebaut ist.

Bei der Antriebsspannung handelt es sich insbesondere um eine Wechselspannung, so dass nachfolgend oft nur von Wechselspannung gesprochen wird. Generell kann jedoch auch jede sonstige Spannung, beispielsweise eine gepulste und/oder frequenzmodellierte Gleichspannung o. dgl. eingesetzt werden. Insbesondere kann die Frequenz der dem Elektromagneten zugeführten Antriebsspannung verändert werden. Diese Frequenz wird bei der vorliegenden Erfindung auch als Antriebsfrequenz bezeichnet.

Weitere Vorteile, Merkmale, Eigenschaften und Aspekte der vorliegenden Erfindung ergeben sich aus der folgenden Beschreibung einer bevorzugten Ausführungsform anhand der Zeichnung. Es zeigt:
Fig. 1 eine schematische, teilschnittartige Darstellung einer vorschlagsgemäßen Schwingfördereinrichtung mit einem vorschlagsgemäßen Schwingantrieb; und
Fig. 2 ein schematisches Diagramm des Spannungsverlaufs.

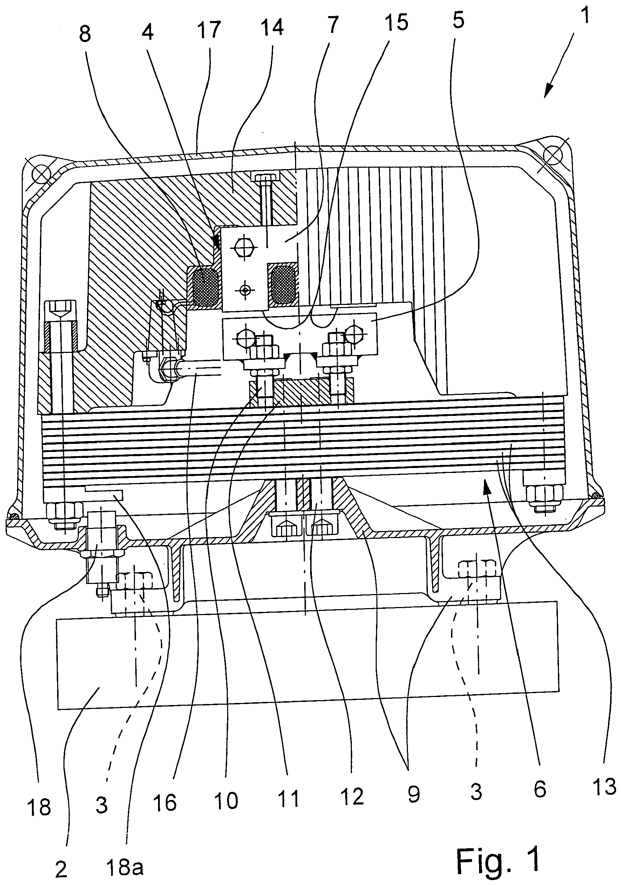

Fig. 1 zeigt in einer schematischen, teilgeschnittenen Ansicht einen vorschlagsgemäßen Schwingantrieb 1 für eine zugeordnete Schwingfördereinrichtung 2, wie eine Förderrinne, ein Schwingsieb o. dgl., die nur teilweise dargestellt ist. Insbesondere ist der Schwingantrieb 1 fest mit der Schwingfördereinrichtung 2 verbunden oder verbindbar, beispielsweise über Schrauben 3 o. dgl.

Wenn der Schwingantrieb 1 schwingt, wird die Schwingfördereinrichtung 2 entsprechend mit der gleichen Schwingfrequenz in Schwingung versetzt.

Der Schwingantrieb 1 weist einen Elektromagneten 4 und einen Anker 5 auf, die über eine Feder 6 relativ zueinander bewegbar verbunden und gehalten sind.

Der Elektromagnet 4 weist einen magnetischen oder magnetisierbaren Kern 7, insbesondere ein Blechpaket, und mindestens eine zugeordnete Spule 8 auf.

Der Anker 5 ist magnetisch bzw. magnetisierbar und vorzugsweise als Blechpaket ausgeführt.

Beim Darstellungsbeispiel ist der Anker 5 "feststehend" ausgebildet, nämlich fest mit der Schwingfördereinrichtung 2 verbindbar bzw. einer Halterung 9 oder einem sonstigen Gehäuseteil des Schwingantriebs 1 verbunden oder davon gebildet. Insbesondere ist der Anker 5 über Schrauben 10, ein Klemmstück 11 und Schrauben 12 mit dem Halteteil 9 fest verbunden.

Es ist jedoch auch möglich, dass der Elektromagnet 4 fest mit der Schwingfördereinrichtung 2 verbunden und der Anker 5 demgegenüber bewegbar bzw. in Schwingung versetzbar ist.

Die vorzugsweise als Federpaket, das insbesondere aus Blattfedern bzw. Federelementen 13 gebildet oder aufgebaut ist, ausgeführte Feder 6, ist beim Darstellungsbeispiel mittig gehalten und/oder von dem Klemmstück 11 festgelegt, insbesondere fest mit dem Halteteil 9 bzw. einem sonstigen Gehäuseteil des Schwingantriebs 1 verbunden.

Die Feder 6 bzw. das Federpaket ist mit dem freien bzw. schwingenden Ende - beim Darstellungsbeispiel mit beiden Enden - mit dem Elektromagneten 4 bzw. einen Spulenhalter 14 des Elektromagneten 4 verbunden, insbesondere verschraubt.

Zur groben Anpassung des Schwingantriebs 1 an die jeweilige Schwingfördereinrichtung 2 bzw. deren übliches Nutzgewicht ist die Federstärke und/ oder Federcharakteristik der Feder 6 vorzugsweise veränderbar bzw. variierbar oder einstellbar. Vorzugsweise hierzu ist die Anzahl der Federelemente 13, aus denen die Feder 6 aufgebaut ist, veränderbar bzw. an die jeweiligen Erfordernisse anpassbar. Alternativ oder zusätzlich können auch unterschiedliche Federelemente 13 bzw. Federelemente 13 mit verschiedenen Federcharakteristika eingesetzt werden. Dies ist beim Darstellungsbeispiel aufgrund der vorgesehenen Verschraubung sehr einfach möglich. Jedoch sind grundsätzlich auch andere Konstruktionen möglich.

Fig. 1 zeigt den Schwingantrieb 1 im Ruhezustand, also mit nicht ausgelenkter Feder 6. Der Elektromagnet 4 nimmt mit mindestens einem Pol 15 seines Kerns 7, einem Polschuh o. dgl. - beim Darstellungsbeispiel mit zwei Polen 15 - einen mittleren Abstand zu dem Anker 5 ein. Im Betrieb schwingt der Elektromagnet 4 relativ zu dem Anker 5 vorzugsweise symmetrisch um diesen mittleren Abstand. Grundsätzlich ist jedoch ein asymmetrisches Schwingen um den Ruheabstand oder ein Schwingen quer dazu möglich.

Der Elektromagnet 4 bzw. dessen Spule 8 oder Spulen 8 ist bzw. sind bei dem Darstellungsbeispiel über mindestens zumindest eine Zuleitung 16 mit Strom versorgbar. Die entsprechende Stromversorgungseinrichtung, Steuereinrichtung und/oder Regeleinrichtung ist nicht gezeigt. Vorzugsweise sind diese Komponenten außerhalb bzw. getrennt vom Schwingantrieb 1, insbesondere außerhalb eines Gehäuses 17 des Schwingantriebs 1, angeordnet. Jedoch ist es grundsätzlich auch möglich, diese Komponenten zumindest zum Teil im Schwingantrieb 1 bzw. innerhalb des Gehäuses 17 des Schwingantriebs 1 anzuordnen.

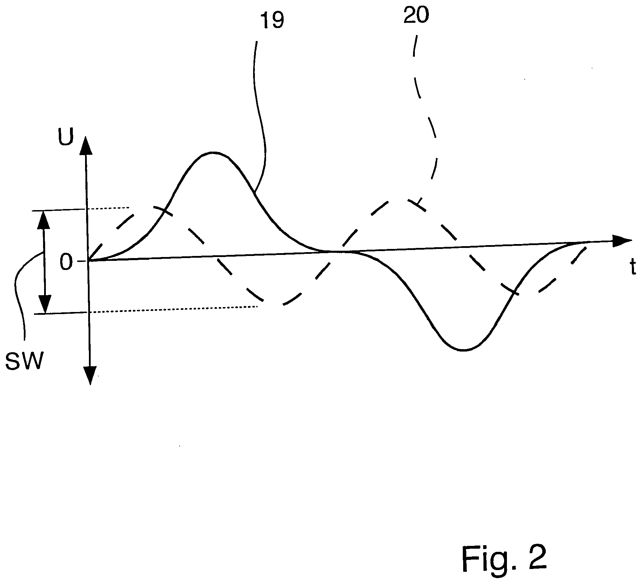

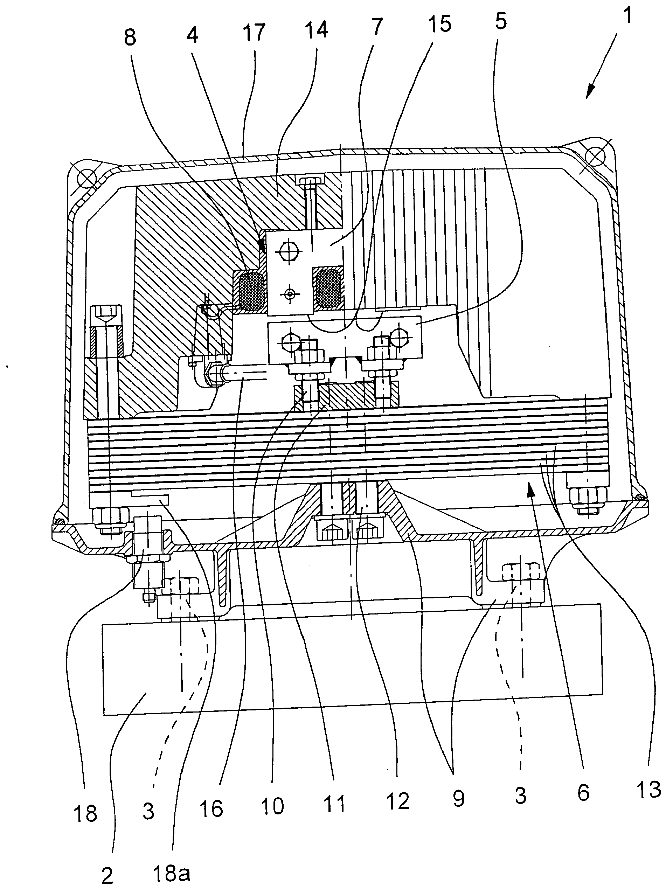

Beim Betrieb des Schwingantriebs 1 wird der Elektromagnet 4 bzw. dessen Spule 8 mit Strom versorgt, wobei die elektrische Spannung bzw. der zugeführte Strom mit der Antriebsfrequenz moduliert wird, um ein entsprechend mit der Antriebsfrequenz variierendes Magnetfeld zu erzeugen. Das Magnetfeld bewirkt, dass der Elektromagnet 4 den Anker 5 entsprechend anzieht, so dass der Elektromagnet 4 relativ zum Anker 5 in Schwingung versetzt wird. Die Pole 15 schwingen dann insbesondere um den mittleren Abstand. Die Amplitude (von positiver bis negativer Auslenkung) dieser Abstandsänderung wird bei der vorliegenden Erfindung als Schwingweite SW bezeichnet, die in Fig. 2 schematisch angedeutet ist und beispielsweise etwa 5 bis 20 mm beträgt.

Zur Erfassung der Schwingung bzw. Auslenkung, insbesondere der Schwingweite SW, weist der Schwingantrieb 1 vorzugsweise einen Sensor 18, insbesondere einen induktiven Wegaufnehmer o. dgl., auf, wie in Fig. 1 angedeutet. Der Sensor 18 ist beispielsweise am Halteteil 9 und/oder "feststehend" befestigt und erfasst den Abstand bzw. die Annäherung eines Abschnitts des Spulenhalters 14, eines vorzugsweise metallischen Abschnitts 18a, der beispielsweise zusammen mit der Feder 6 mit dem Spulenhalter 14 und/oder einem sonstigen sich bewegenden Teil verbunden ist, o. dgl. Vorzugweise ist der Sensor 18 im Bereich einer Verbindung oder Befestigung der Feder 6 und/oder auf einer dem Elektromagneten 4 abgewandten Seite der Feder 6 oder möglichst weit entfernt vom Elektromagneten 4 und/oder innerhalb des Schwingantriebs 1 bzw. dessen Gehäuse 17 angeordnet.

Vorzugsweise erfolgt eine Überwachung bzw. fortlaufende Erfassung der Schwingweite SW und insbesondere eine Regelung der Schwingweite SW des Schwingantriebs 1.

Beim Darstellungsbeispiel erfolgt die Regelung der Schwingweite SW insbesondere durch entsprechende Variation des Effektivwerts der Antriebsspannung. Hierbei wird die Antriebsfrequenz vorzugsweise zumindest im Wesentlichen konstant gehalten. Der Effektivwert der Spannung wird also als Stellgröße eingesetzt. Die Variation des Effektivwerts kann beispielsweise durch entsprechende Impulsbreitenmodulation oder einen anderen Spannungsverlauf, eine Veränderung der Signalform und/oder insbesondere durch eine Variation des maximalen Werts (Spitzenwerts) der Spannung erreicht werden.

Fig. 2 zeigt schematisch einen bevorzugten, insbesondere zumindest im Wesentlichen stetigen bzw. glatten Spannungsverlauf 19 der Antriebsspannung, mit der der Elektromagnet 4 bzw. dessen Spule 8 betrieben wird.

Bei der Antriebsspannung handelt es sich insbesondere um eine Wechselspannung.

Die Antriebsspannung setzt sich vorzugsweise zumindest im Wesentlichen aus vollen Sinusperioden mit abwechselnden Vorzeichen zusammen. Der Spannungsverlauf entspricht vorzugsweise einer etwas modifizierten Sinusfunktion, insbesondere wird er so modifiziert, dass ein möglichst sinusförmiger Stromverlauf entsteht.

Bei der bevorzugten Ausführungsform wird im Betrieb des Schwingantriebs 1 die elektrische Spannung so moduliert, dass ein sinusähnlicher Strom durch die Spule(n) 8 fließt, der im Schwingantrieb 1 ein variierendes Magnetfeld mit der Schwingfrequenz des Schwingantriebs 1 erzeugt.

Der Spannungsverlauf 19 ist zumindest im Wesentlichen symmetrisch zur Nulllinie. So können unerwünschte Gleichstromanteile vermieden werden, da diese zu unerwünschten Remanenzeffekten führen können.

Die Ableitung der Antriebsspannung ist zumindest im Wesentlichen null bei Durchgang durch und/oder Annäherung an die Nulllinie. So können unerwünschte Oberwellen vermieden werden.

In Fig. 2 ist als gestrichelte Linie 20 schematisch die Schwingung des Elektromagneten 4 relativ zum Anker 5 angedeutet, also die Auslenkung um den mittleren Abstand. Die maximale Amplitude dieser Schwingung stellt die bereits genannte Schwingweite SW dar.

Die periodische Änderung des Magnetfelds des Elektromagneten 4 hat zur Folge, dass die Anziehungskraft zwischen dem Elektromagneten und dem Anker 5 periodisch zu- und abnimmt, so dass sich eine insbesondere harmonische Schwingung mit einer Schwingfrequenz einstellt. Entsprechend ist die Schwingfördereinrichtung 2 mit dieser Schwingfrequenz vom Schwingantrieb 1 in Schwingung versetzbar.

Aus Fig. 2 ist ersichtlich, dass die Antriebsfrequenz vorzugsweise halb so groß wie die Schwingfrequenz des Schwingantriebs 1 und damit der Schwingfördereinrichtung 2 ist.

Zur Variation der Effektivspannung wird die in Fig. 2 gezeigte oder eine sonstige bevorzugte Signalform insbesondere zumindest im Wesentlichen beibehalten und nur proportional vergrößert oder verkleinert, um die Effektivspannung in gewünschter Weise zu ändern.

Besonders bevorzugt wird der Spannungsverlauf 19 durch Pulsbreitenmodulation erzeugt bzw. mehr oder weniger angenähert werden.

Die Regelung der Schwingweite SW erfolgt insbesondere derart, dass im laufenden Betrieb (nach einem Kalibrierschritt, der noch näher erläutert wird) die Schwingweite SW mittels des Sensors 18 fortlaufend überwacht bzw. erfasst wird. Die Schwingweite SW stellt die Regelgröße dar. Bei einer Abweichung von einem Sollwert bzw. einer Führungsgröße, der bzw. die vorzugsweise fest vorgegeben wird und/oder einstellbar ist, wird die Effektivspannung der Antriebsspannung als Stellgröße eingesetzt und verändert, bis die Regelgröße den Sollwert erreicht, also die gewünschte Schwingweite SW erreicht wird.

Wenn im fortlaufenden Betrieb die Schwingweite SW einen vorzugsweise vorgebbaren Mindestwert erreicht oder unterschreitet, kann eine Fehlermeldung ausgegeben werden, eine automatisierte Abschaltung des Schwingantriebs 1 erfolgen und/oder der Kalibrierschritt erfolgen.

Wenn der Effektivwert oder Maximalwert bzw. Spitzenwert der Antriebsspannung einen insbesondere einstellbaren oberen Grenzwert erreicht oder überschreitet kann entsprechend eine Fehlermeldung ausgegeben werden, eine automatisierte Abschaltung des Schwingantriebs 1 erfolgen und/oder der Kalibrierschritt durchgeführt werden.

Besonders bevorzugt wird der Kalibrierschritt bei jedem Einschalten des Schwingantriebs 1 und/oder periodisch durchgeführt.

Mittels des Kalibrierschritts wird die Antriebsfrequenz festgelegt. Insbesondere erfolgt eine Neufestlegung, bei der die vorherige oder frühere Antriebsfrequenz oder eine Notfallfrequenz, die beispielsweise bei einem Fehler oder bei Fehlschlagen des Kalibrierschritts verwendet wird, geändert oder überschrieben wird.

Beim Kalibrierschritt wird die Antriebsfrequenz vorzugsweise fortlaufend und/oder raupenförmig geändert, bis die Schwingweite SW einen gewünschten Wert, insbesondere den Sollwert, der später auch für die Regelung der Schwingweite SW im fortlaufenden Betrieb (Normalbetrieb) verwendet wird, erreicht. Bei dem Kalibrierschritt wird beispielsweise von einer unteren oder Mindestfrequenz für die Antriebsfrequenz ausgegangen. Diese Frequenz wird dann insbesondere rampenförmig geändert - beim Darstellungsbeispiel kontinuierlich erhöht - bis die Schwingweite SW den gewünschten Wert bzw. Sollwert erreicht. So wird auf sehr einfache, sichere und schnelle Weise eine Annäherung an die Eigenfrequenz des Gesamtsystems bestehend aus der Schwingfördereinrichtung 2 und dem Schwingantrieb 1 im beladenen Zustand bzw. Nutzzustand erreicht bzw. ermöglicht.

Grundsätzlich ist es jedoch auch möglich, beim Kalibrierschritt von einer hohen Antriebsfrequenz auszugehen und diese zu verringern oder auf sonstige Art und Weise zu verändern, bis eine Antriebsfrequenz ermittelt und festgelegt wird, die zu der gewünschten Schwingweite SW führt.

Der Kalibrierschritt wird vorzugsweise mit reduzierter, beispielsweise halber Effektivspannung der Antriebsspannung durchgeführt, so dass anschließend die Effektivspannung als Regelgröße für den weiteren fortlaufenden Betrieb (Normalbetrieb) verwendet werden kann und ein möglichst größerer Regelbereich zur Verfügung steht. Jedoch können hierbei zunächst auch andere Effektivspannungen oder ggf. frequenzabhängige Effektivspannungen eingesetzt werden.

Der Schwingantrieb 1 bzw. dessen Steuerung oder Regelung weist vorzugsweise einen Speicher auf, um alle wesentlichen Parameter und/oder Fehler, insbesondere die einzelnen Kalibrierschritte und/oder fortlaufende Parameter des Normalbetriebs, erfassen und speichern zu können, so dass diese Parameter später für Auswertungen, Fehlerüberprüfungen o. dgl. zur Verfügung stehen.

Der vorschlagsgemäße Schwingantrieb 1 bzw. dessen Steuerung oder Regelung weist vorzugsweise ein sich an alle üblichen Netzspannungen selbstständig anpassendes Netzteil auf.

Der vorschlagsgemäße Schwingantrieb 1 ist vorzugsweise für Nutzgewichte von 50 bis 1000 kg und/oder einen Nutzgewichtsbereich von mindestens 5 oder 10 (kleinstes zu größtes Nutzgewicht) oder sogar mehr ausgelegt. Das Nutzgewicht ist hier als das Gewicht der Schwingfördereinrichtung 2 ohne Schwingantrieb 1 zu verstehen; die Auflast durch Fördergut bleibt vorzugsweise unberücksichtigt. Die Schwingfördereinrichtung 2 mit dem vorschlagsgemäßen Schwingantrieb 1 kann eine wesentlich größere Masse aufweisen.

Dementsprechend ist der Schwingantrieb 1 universell einsetzbar. Insbesondere sind keine Massen- oder Netzanpassungen, Kalibrierungen o. dgl. vor Ort erforderlich, auch wenn der Schwingantrieb 1 erst vor Ort eingebaut wird.

Die Antriebsfrequenz oder die Schwingfrequenz beträgt vorzugsweise 30 bis 40 Hz und ist insbesondere in diesem Bereich oder einem Teil davon einstellbar bzw. variabel.

Es werden ein Schwingantrieb für eine Schwingfördereinrichtung und ein Verfahren zum Betreiben des Schwingantriebs vorgeschlagen. Eine sehr einfache Handhabung und eine universelle Einsetzbarkeit ergeben sich insbesondere dadurch, dass bei jedem Einschalten die Antriebsfrequenz, mit der der Elektromagnet betrieben wird, neu festgelegt wird und dass die Schwingweite des Elektromagneten relativ zum Anker fortlaufend erfasst und nach Festlegung der Antriebsfrequenz durch Variation der Effektivspannung geregelt wird.

## Patentansprüche

1. Verfahren zum Betreiben eines Schwingantriebs (1) für eine Schwingfördereinrichtung (2), wie eine Förderrinne, ein Sieb oder einen Separator, wobei ein Elektromagnet (4) mit einer zumindest im Wesentlichen symmetrisch bezüglich der Nulllinie verlaufenden Antriebsspannung mit einer Antriebsfrequenz beaufschlagt und dadurch relativ zu einem über eine Feder (6) gekoppelten Anker (5) in Schwingung versetzt wird,
**dadurch gekennzeichnet,**
**dass** die Ableitung der Antriebsspannung bei Durchgang durch oder Annäherung an die Nulllinie zumindest im Wesentlichen null ist.

2. Verfahren nach Anspruch 1, **dadurch gekennzeichnet, dass** die Antriebsspannung zumindest im Wesentlichen aus vollen Sinusperioden mit abwechselnden Vorzeichen aufgebaut ist und/oder dass die Frequenz der Antriebsspannung halb so groß wie die Schwingfrequenz ist.

3. Verfahren nach Anspruch 1 oder 2, **dadurch gekennzeichnet, dass** die Antriebsfrequenz in einem Kalibrierschritt bei jedem Einschalten des Schwingantriebs (1) und/oder periodisch und/oder bei Erreichen oder Unterschreiten eines Mindestwerts durch die Schwingweite (SW) und/oder bei Erreichen oder Überschreiten eines oberen Grenzwerts durch den Effektivwert oder Maximalwert der Antriebsspannung neu festgelegt wird.

4. Verfahren nach Anspruch 3, **dadurch gekennzeichnet, dass** im Kalibrierschritt die Antriebsfrequenz verändert wird, bis die Schwingweite (SW) einen Sollwert erreicht.

5. Verfahren nach Anspruch 3 oder 4, **dadurch gekennzeichnet, dass** nach dem Kalibrierschritt und/oder bei zumindest im Wesentlichen festgelegter Antriebsfrequenz die Schwingweite (SW) der Relativbewegung des Elektromagneten (4) zum Anker (5) durch Variation des Effektivwerts der Antriebsspannung auf einen Sollwert geregelt wird.

6. Verfahren nach einem der voranstehenden Ansprüche, **dadurch gekennzeichnet, dass** die Schwingweite (SW) der Relativbewegung des Elektromagneten (4) zum Anker (5) fortlaufend erfasst und geregelt wird.

7. Schwingantrieb (1) für eine Schwingfördereinrichtung (2), wie eine Förderrinne, ein Sieb oder einen Separator, mit einem Elektromagneten (4) und einem Anker (5), die über eine Feder (6) miteinander gekoppelt und relativ zueinander durch Steuerung oder Regelung des Magnetfelds des Elektromagneten (4) durch Beaufschlagung mit einer zumindest im Wesentlichen symmetrisch bezüglich der Nulllinie verlaufenden Antriebsspannung mit einer Antriebsfrequenz in Schwingung versetzt wird, wobei der Schwingantrieb derart eingerichtet ist, die Schwingweite (SW) der Relativbewegung des Elektromagneten (4) zum Anker (5) zu erfassen und/oder zu regeln, **dadurch gekennzeichnet,**
**dass** der Schwingantrieb (1) zum Betrieb mit einer Antriebsspannung, deren Ableitung bei Durchgang durch oder Annäherung an die Nulllinie zumindest im Wesentlichen null ist, ausgebildet ist.

8. Schwingantrieb nach Anspruch 7, **dadurch gekennzeichnet, dass** der Schwingantrieb (1) einen Sensor (18), insbesondere einen induktiven Wegaufnehmer, zur Erfassung der Schwingweite (SW) aufweist.

9. Schwingantrieb nach Anspruch 8, **dadurch gekennzeichnet, dass** der Sensor (18) feststehend, am Anker (5) oder einem Gehäuse- oder Halteteil (9), im Bereich einer Verbindung der Feder (6) und/oder auf einer dem Elektromagneten (4) abgewandten Seite der Feder (6) angebracht ist.

10. Schwingantrieb nach einem der Ansprüche 7 bis 9, **dadurch gekennzeichnet, dass** der Effektivwert der Antriebsspannung die Stellgröße zur Regelung der Schwingweite (SW) bildet, insbesondere erst nach Festlegung der Antriebs- bzw. Schwingfrequenz.

11. Schwingantrieb nach einem der Ansprüche 7 bis 10, **dadurch gekennzeichnet, dass** die Federstärke der Feder (6) zur Anpassung der Leistung des Schwingantriebs (1) variierbar ist, und/oder dass die Feder (6) aus mehreren, insbesondere blattförmigen Federelementen (13) aufgebaut ist, deren Anzahl zur Variation der Federstärke veränderbar ist.

12. Schwingantrieb nach einem der Ansprüche 7 bis 11, **dadurch gekennzeichnet, dass** die Antriebs- oder Schwingfrequenz variabel ist, insbesondere bei jedem Einschalten neu festlegbar ist.

13. Schwingantrieb nach Anspruch 12, **dadurch gekennzeichnet, dass** die Antriebs- bzw. Schwingfrequenz sich nach der Resonanzfrequenz des Systems aus Schwingantrieb (1) und Schwingfördereinrichtung (2) richtet, in einem Kalibrierschritt einstellbar oder festlegbar ist und/oder im Wesentlichen 3 bis 5 % höher als die Resonanzfrequenz ist.

14. Schwingantrieb nach einem der Ansprüche 7 bis 13, **dadurch gekennzeichnet, dass** der Schwingantrieb (1) zum Betrieb mit einem Verfahren nach einem der Ansprüche 1 bis 6 ausgebildet ist.

15. Schwingfördereinrichtung (2), wie eine Förderrinne, ein Sieb oder ein Separator, mit einem Schwingantrieb (1) nach einem der Ansprüche 7 bis 14.

## Claims

1. Method for operating an oscillating drive (1) for an oscillating conveyor device (2), such as a conveyor trough, a screen or a separator, wherein an electromagnet (4) is supplied with a drive voltage with a drive frequency and is thereby set in oscillation relative to an armature (5) coupled via a spring (6), the drive voltage running at least substantially symmetrically with respect to the zero line,
**characterized**
**in that** the derivative of the drive voltage when passing through or approaching the zero line is at least substantially zero.

2. Method according to claim 1, **characterized in that** the drive voltage is at least substantially composed of full sine periods with alternating signs and/or **in that** the frequency of the drive voltage is half the oscillation frequency.

3. Method according to claim 1 or 2, **characterized in that** the drive frequency is newly determined in a calibration step each time the oscillating drive (1) is switched on and/or periodically and/or when the oscillation amplitude (SW) reaches or falls below a minimum value and/or when the effective value or maximum value of the drive voltage reaches or exceeds an upper limit value.

4. Method according to claim 3, **characterized in that** in the calibration step the drive frequency is changed until the oscillation amplitude (SW) reaches a desired value.

5. Method according to claim 3 or 4, **characterized in that** after the calibration step and/or at an at least substantially fixed drive frequency, the oscillation amplitude (SW) of the relative movement of the electromagnet (4) to the armature (5) is feedback controlled to a desired value by variation of the effective value of the drive voltage.

6. Method according to one of the preceding claims, **characterized in that** the oscillation amplitude (SW) of the movement of the electromagnet (4) relative to the armature (5) is continuously detected and feedback controlled.

7. Oscillating drive (1) for an oscillating conveyor device (2), such as a conveyor trough, a screen or a separator, with an electromagnet (4) and an armature (5), which are coupled to one another via a spring (6) and are caused to oscillate relative to one another by controlling or feedback controlling the magnetic field of the electromagnet (4) by applying a drive voltage with a drive frequency, the drive voltage running at least substantially symmetrical with respect to the zero line, the oscillating drive being configured to detect and/or feedback control the oscillation amplitude (SW) of the movement of the electromagnet (4) relative to the armature (5),
**characterized**
**in that** the oscillating drive (1) is designed for operation with a drive voltage whose derivative is at least substantially zero when passing through or approaching the zero line.

8. Oscillating drive according to claim 7, **characterized in that** the oscillating drive (1) comprises a sensor (18), in particular an inductive displacement transducer, for detecting the oscillation amplitude (SW).

9. Oscillating drive according to claim 8, **characterized in that** the sensor (18) is mounted in a stationary manner, on the armature (5) or a housing part or holding part (9), in the region of a connection of the spring (6) and/or on a side of the spring (6) facing away from the electromagnet (4).

10. Oscillating drive according to one of claims 7 to 9, **characterized in that** the effective value of the drive voltage forms the manipulated variable for feedback controlling the oscillation amplitude (SW), in particular only after the drive frequency or oscillation frequency has been determined.

11. Oscillating drive according to one of claims 7 to 10, **characterized in that** the spring strength of the spring (6) is variable in order to adapt the power of the oscillating drive (1), and/or **in that** the spring (6) is constructed from several, in particular leaf-shaped spring elements (13), the number of which is changeable in order to vary the spring strength.

12. Oscillating drive according to one of claims 7 to 11, **characterized in that** the drive frequency or oscillation frequency is variable, in particular can be newly determined at each switch-on.

13. Oscillating drive according to claim 12, **characterized in that** the drive frequency or oscillation frequency is oriented to the resonant frequency of the system comprising oscillating drive (1) and oscillating conveyor device (2), is adjustable or determinable in a calibration step and/or is substantially 3 to 5% higher than the resonant frequency.

14. Oscillating drive according to one of claims 7 to 13, **characterized in that** the oscillating drive (1) is designed for operation with a method according to one of claims 1 to 6.

15. Oscillating conveyor device (2), such as a conveyor trough, a screen or a separator, with an oscillating drive (1) according to one of claims 7 to 14.

## Revendications

1. Procédé pour faire fonctionner une commande oscillante (1) pour un dispositif de transport oscillant (2), tel qu'une goulotte de convoyeur, un tamis ou un séparateur, dans lequel un électroaimant (4) est soumis à une tension de commande avec une fréquence de commande et est ainsi mis en oscillation par rapport à un induit (5) couplé par l'intermédiaire d'un ressort (6), la tension de commande étant au moins sensiblement symétrique par rapport à la ligne zéro,
**caractérisé**
**en ce que** la dérivée de la tension de commande lors du passage ou de l'approche de la ligne zéro est au moins sensiblement zéro.

2. Procédé selon la revendication 1, **caractérisé en ce que** la tension de commande est au moins sensiblement composée de périodes sinusoïdales pleines avec des signes alternés et/ou **en ce que** la fréquence de la tension de commande est égale à la moitié de la fréquence d'oscillation.

3. Procédé selon la revendication 1 ou 2, **caractérisé en ce que**, dans une étape d'étalonnage, la fréquence de commande est nouvellement déterminée à chaque fois que la commande oscillante (1) est mise en marche et/ou périodiquement et/ou lorsque l'amplitude (SW) atteinte ou tombée en dessous d'une valeur minimale et/ou lorsque la valeur efficace ou la valeur maximale de la tension de commande atteinte ou dépassée une valeur limite supérieure.

4. Procédé selon la revendication 3, **caractérisé en ce que** dans l'étape d'étalonnage, la fréquence de commande est modifiée jusqu'à ce que l'amplitude (SW) atteigne une valeur de consigne.

5. Procédé selon la revendication 3 ou 4, **caractérisé en ce que**, après l'étape d'étalonnage et/ou une fréquence de commande au moins sensiblement fixe, l'amplitude (SW) du mouvement relatif de l'électroaimant (4) par rapport à l'induit (5) est régulée en faisant varier la valeur efficace de la tension de commande à une valeur de consigne.

6. Procédé selon l'une quelconque des revendications précédentes, **caractérisé en ce que** l'amplitude (SW) du mouvement relatif de l'électroaimant (4) par rapport à l'induit (5) est détectée et régulée en continu.

7. Commande oscillante (1) pour un dispositif de transport oscillant (2), tel qu'une goulotte de convoyeur, un tamis ou un séparateur, avec un électroaimant (4) et un induit (5) couplés ensemble par un ressort (6) et mis en oscillation l'un par rapport à l'autre par commande ou régulation du champ magnétique de l'électroaimant (4) par application d'une tension de commande avec une fréquence de commande, la tension de commande étant au moins sensiblement symétrique par rapport à la ligne zéro, la commande oscillante étant conçue de manière à détecter et/ou réguler l'amplitude (SW) du mouvement relatif de l'électroaimant (4) par rapport à l'induit (5),
**caractérisée**
**en ce que** la commande oscillante (1) est conçue pour fonctionner avec une tension de commande dont la dérivée est au moins sensiblement égale à zéro lors du passage ou de l'approche de la ligne zéro.

8. Commande oscillante selon la revendication 7, **caractérisée en ce que** la commande oscillante (1) comporte un capteur (18), en particulier un capteur de déplacement inductif, destiné à détecter l'amplitude (SW).

9. Commande oscillante selon la revendication 8, **caractérisée en ce que** le capteur (18) est fixé à l'induit (5) ou à une pièce de logement ou de maintien (9), dans la région d'un assemblage du ressort (6) et/ou sur un côté du ressort (6) opposé à l'électroaimant (4).

10. Commande oscillante selon l'une quelconque des revendications 7 à 9, **caractérisée en ce que** la valeur efficace de la tension de commande forme la valeur de régulation servant à réguler l'amplitude (SW), en particulier seulement après avoir déterminé la fréquence de commande ou d'oscillation.

11. Commande oscillante selon l'une quelconque des revendications 7 à 10, **caractérisée en ce que** la force du ressort (6) est variable afin de réguler la puissance de la commande oscillante (1) et/ou **en ce que** le ressort (6) est construit de plusieurs éléments de ressort (13), notamment en forme de lames, dont le nombre peut être modifié pour faire varier la force du ressort.

12. Commande oscillante selon l'une quelconque des revendications 7 à 11, **caractérisée en ce que** la fréquence de commande ou d'oscillation est variable, en particulier peut être redéfinie à chaque mise en marche.

13. Commande oscillante selon la revendication 12, **caractérisée en ce que** la fréquence de commande ou d'oscillation est fonction de la fréquence de résonance du système composé de la commande oscillante (1) et du dispositif de transport oscillant (2), est réglable ou définissable dans une étape d'étalonnage et/ou est sensiblement supérieure de 3 à 5 % à la fréquence de résonance.

14. Commande oscillante selon l'une quelconque des revendications 7 à 13, **caractérisée en ce que** la commande oscillante (1) est conçue pour fonctionner avec un procédé selon l'une quelconque des revendications 1 à 6.

15. Dispositif de transport oscillant (2), tel qu'une goulotte de convoyeur, un tamis ou un séparateur, avec une commande oscillante (1) selon l'une quelconque des revendications 7 à 14.
